# EUROPEAN PATENT SPECIFICATION

(11) **EP 2 346 922 B1**
(45) Date of publication and mention of the grant of the patent: **05.03.2014**
(21) Application number: 08876073.1
(22) Date of filing: 15.10.2008
(51) Int. Cl.: C08G 63/06, C08G 63/91

(54) **PROCESS FOR CONTROLLED DEGRADATION OF POLYHYDROXYALKANOATES AND PRODUCTS OBTAINABLE THEREFROM**
VERFAHREN ZUM KONTROLLIERTEN ABBAUVON POLYHYDROXYALKANOATEN UND DARAUS HERGESTELLTE PRODUKTE
PROCÉDÉ POUR LA DÉGRADATION CONTRÔLÉE DE POLYHYDROXYALCANOATES ET PRODUITS POUVANT ÊTRE OBTENUS SELON CE PROCÉDÉ

(43) Date of publication of application: 27.07.2011
(73) Proprietor: Alma Mater Studiorum -Universita' di Bologna, 40126 Bologna (IT); Institute of Polymers and Carbon Materials, 41800 Zabrze, Silesia (PL)
(72) Inventor: SCANDOLA, Mariastella, I-40100 Bologna (IT); MAZZOCCHETTI, Laura, I-61014 Montecopiolo (PU) (IT); FOCARETE, Maria, Letizia, I-40100 Bologna (IT); KAWALEC, Michal, PL-43-400 Cuestyn (PL); KURCOK, Piotr, PL-44-117 Gliwice (PL); ADAMUS, Grazyna, PL-44-117 (PL); KOWALCZUK, Marek, PL-40-800 Zabrze (PL)
(74) Representative: Biggi, Cristina
(86) International application number: PCT/IT2008/000646
(87) International publication number: WO 2010/044112

(56) References cited:
- EP-A- 1 188 781
- US-A1- 2005 288 481
- US-B1- 6 867 248
- KAWALEC M. ET AL.: "Carboxylate-Induced Degradation of Poly(3-hydroxybutyrate)s" BIOMACROMOLECULES, vol. 8, no. 4, April 2007 (2007-04), pages 1053-1058, XP002532575

## Description

### Background of the invention

The present invention relates to a process for controlled degradation of polyhydroxyalkanoates and to products obtainable therefrom.

Polyhydroxyalkanoates (PHAs) are polyesters which are produced in nature by bacterial fermentation of sugar or lipids. Synthetic routes are also available. Depending on the molecular weight and, in the case of copolymers, on the specific combination of comonomers, the properties of PHAs may vary from thermoplastic to elastomeric. The mechanical properties and biocompatibility of PHAs can also be changed by blending PHAs with other polymers, enzymes and inorganic materials, to make them suitable for a wide range of applications, particularly in the biomedical field.

One of the most studied PHAs is poly(3-hydroxybutyrate) (PHB), which is widely distributed in nature. For instance, the high molecular weight isotactic PHB is a storage material used by bacteria in nutrition-limited environments as an energy and carbon source. Synthetic analogues of this biodegradable natural polymer of potential industrial importance are obtainable by direct copolymerization of epoxides with carbon monoxide and via ring-opening polymerization of β-butyrolactone (4-methyl-2-oxetanone) to isotactic, atactic (a-PHB) and syndiotactic poly-3-hydroxybutyrate. Short chain PHB, regardless of its tacticity, may be prepared from high molecular weight PHB by high temperature thermal degradation, which proceeds according to a random polymer-chain scission mechanism via intramolecular stereoselective cis-elimination with the formation of oligomers containing trans-crotonate end groups, as the main products. The random chain scission by cis-elimination mechanism has been considered as the general pathway of PHB thermal degradation up to now.

More recently, in International patent application WO 2007/107808; filed in the name of the Applicants, it is described a method for controlling thermal degradation of anionically terminated polymers, particularly of PHAs, by protonating or alkylating said anionic moieties, particularly carboxylate groups. Moreover, it is described the preparation of polymeric blends having controlled thermal stability by mixing PHAs with polymers having an anionically activated moiety. As reported in the above patent application, these inventions are mainly based on the finding that PHAs can undergo chain scission, at moderate temperatures, which results in polymer degradation, via an E1cB elimination mechanism. This elimination mechanism involves the anionic moieties of a polymer which abstracts the acidic proton at C2 position of PHA with the generation of a carbanion, which undergoes the elimination reaction, leading to chain scission.

The Applicants have also tried to achieve a controlled degradation of PHB by reaction with a carboxylate salt, specifically an acetate, at relatively low temperatures (150°C-170°C), as described in the article by Kawalec, M. et al, published in Biomacromolecules, Vol. 8, No. 4, 2007, pages 1053-1058. The results were not satisfactory, since the reaction of PHB with an acetate yields waxy solids or very viscous liquids, which cannot be easily processed, making them unsuitable for applications on a large scale. Moreover, from the reaction mixture the formed acetic acid is evolved which, besides being corrosive, can interfere with the degradation reaction, therefore an effective control of the reaction itself is practically unfeasible.

### Summary of the invention.

The Applicants have now found that PHAs can be reacted with a carbonate salt so as to achieve a controlled degradation of the PHA chains which yields oligomers and/or polymers having a controlled molecular weight, which is reduced with respect to that of the starting polymers and which can be modulated in view of the specific application for which the products are intended. Moreover, during the reaction carbon dioxide evolves which produces a foamed material which can be easily processed on an industrial scale. Contrary to a compact bulk material which is difficult to handle, the presence of porosity allows, for instance, to obtain a homogeneous powder by grinding or simply crashing the foamed material. In addition, the foamed material can be much more easily solubilized than its bulk analogue. Moreover, the degradation reaction can be carried out as a continuous process, e.g. by means of an extruder, with outstanding advantages for an industrial application.

Additionally, the Applicants have found that the so obtained oligomers or polymers, having an end-group bearing a double bond C=C, e.g. a crotonate end-group for PHB, can be subjected to subsequent modifications to obtain a wide variety of functional end-groups, for instance hydroxyl, carboxyl or oxirane groups by oxidation of the above double bonds. The controlled molecular weight and the presence of double bonds and/or other functional groups as terminal groups make the above oligomers or polymers particularly suitable as macromers (building blocks) for the synthesis and/or modification of polymers, particularly of biodegradable polymers. Moreover, the PHA oligom 1'ers may be used in the area of controlled delivery systems in agro-chemistry, in the cosmetic industry, in medicine in the form of nano- or microspheres, in household products and in coating systems.

Therefore, according to a first aspect, the present invention relates to a process for producing polyhydroxyalkanoate oligomers and/or polymers of reduced molecular weight, which comprises reacting at least one polyhydroxyalkanoate with at least one carbonate salt at a temperature of from 50°C to 300°C, preferably from 120°C to 200°C.

According to another aspect the present invention relates to polyhydroxyalkanoate oligomers and/or polymers, said oligomers or polymers being in the form of a foamed material and having a weight average molecular weight (Mw) of from 100 to 100,000, preferably from 1,200 to 25,000. The weight average molecular weight (Mw) can be determined by Size Exclusion Chromatography (SEC) according to known techniques or by mass spectrometry (MALDI TOF and/or ESI MS).

According to another aspect, the present invention relates to polyhydroxyalkanoate oligomers or polymers, said oligomers or polymers having a weight average molecular weight (Mw) of from 100 to 100,000, preferably from 1,200 to 25,000 and having, as first end-group, a carboxyl or carboxylate group and, as second end-group, a functional group selected from: carboxyl, carboxylate, hydroxyl, dihydroxyl, oxirane ring, halogen atom.

### Detailed description of the invention.

As regards the polyhydroxyalkanoates, they are preferably polymers containing repeating units having the following formula:

-O-C(R¹R²)-C(HR³)-C(O)- (I)

wherein:
R¹, R² and R³, equal or different from each other, are selected from: -H, C₁-C₈ alkyl, C₂-C₈ alkenyl, C₆-C₁₀ aryl, said alkyl, alkenyl and aryl groups being optionally substituted by at least one functional group selected from carboxyl, hydroxyl, halogen and alkoxyl groups.

The above polymers may be homopolymers, copolymers or terpolymers. In the case of copolymers or terpolymers, they may be formed by different repeating units corresponding to formula (I), or they may be formed by at least one repeating unit of formula (I) with at least one repeating unit deriving from comonomers able to copolymerize with 3-hydroxyalkanoates, for examples lactones or lactams. In the latter case, the repeating units of formula (I) are preferably present in an amount of at least 5% by mole with respect to the total moles of repeating units.

Particularly preferred repeating units of formula (I) are selected from: 3-hydroxybutyrate, 3-hydroxyvalerate, 3-hydroxyhexanoate, 3-hydroxyoctanoate, 3-hydroxyundec-10-enoate, or combinations thereof.

Particularly preferred PHAs are: poly-3-hydroxybutyrate (P3HB), poly-3-hydroxyvalerate (PHV), poly-3-hydroxyhexanoate (PHH), poly-3-hydroxyoctanoate (PHO), poly(3-hydroxybutyrate-co-3-hydroxyvalerate) (PHBV), poly(3-hydroxybutyrate-co-3-hydroxyhexanoate) (PHBH), poly(3-hydroxybutyrate-co-4-hydroxybutyrate), poly(3-hydroxyoctanoate-co-3-hydroxyundec-10-enoate) (PHOU) copolymers.

As regards the carbonate salt, it can be selected from salts of carbonic acid, particularly carbonates, bicarbonates or mixtures thereof, either anhydrous or in a hydrated form. Counterions may be selected for instance from cations of: alkali metals, e.g. sodium, potassium; alkaline-earth metals, e.g. magnesium, calcium.

The relative amount of the reactants can vary within wide ranges. Generally, the molar ratio between the PHA and the carbonate salt may be within a range from 1000:1 3HA units/salt to 10:1 3HA units/salt, preferably from 500:1 3HA units/salt to 10:1 3HA units/salt.

According to a preferred embodiment, the reaction between the PHAs and the carbonate salt is carried out by dry-mixing the reactants and then by heating the mixture from 50°C to 300°C, preferably from 120°C to 200°C. The reaction is preferably carried out at atmospheric pressure, so as to favour the evolution of carbon dioxide and therefore the foaming of the resulting material. The reaction time may be varied within wide limits, mainly depending on the molecular weight that is required for the oligomers or polymers to be produced. Indicatively, the reaction time may vary from 20 sec to 1.5 hours, preferably from 30 sec to 1 hour. Besides the temperature, a parameter that influences the reaction rate is the amount of carbonate and the nature of the counterion in the carbonate salt: bulky cations usually increase the reaction rate. For instance potassium carbonate reacts, in the same reaction conditions, more quickly than sodium carbonate. Moroever, the reaction rate depends also on the effectiveness of the mechanical means used for mixing the reactants. In this respect, the mixing apparatus may be selected from those commonly used for solventless reactions. Particularly preferred are extruders, e.g. single-screw extruders or double-screw extruders, which, besides being very efficient in mixing the reactants (reactive blending), operate continuously and allow an accurate control of the reaction temperature. However, periodic or flow reactors can also be used.

At the end of the reaction, the PHA oligomers or polymers are obtained in the form of a foamed material, which can be easily processed to be used as such or for subsequent reactions. For instance, the foamed material - if brittle - can be grinded according to known techniques, e.g. by foam crashing through compression followed-if required - by ball mill grinding.

The so obtained PHA oligomers or polymers have, as first end-group, a carboxylate end-group, while the second end-group is a functional group containing a double bond C=C, particularly of formula R¹R²C=CR³-COO-, wherein R¹, R² and R³ are defined as above, e.g. for PHB a crotonate group of formula: CH₃-CH=CH-COO-.

The presence of a double bond C=C in the terminal unit allows to use the oligomers or polymers according to the present invention as macromers in radical polymerization processes (free-radical or controlled such as ATRP and/or RAFT), for instance for the synthesis and/or modification of polymers.

Moreover, as indicated above, when required, the terminal double bonds C=C can be subjected to subsequent modifications to obtain a wide variety of functional endgroups, for instance carboxyl, carboxylate, hydroxyl, dihydroxyl, oxirane ring of formula R¹R²C(O)CR³-COO- (wherein R¹, R² and R³ have the same meaning as indicated above), by oxidation of the above double bonds.

The oxidation can be carried out by means of an oxidizing agent, e.g. an inorganic or organic peroxide, peracid or persalt. Suitable oxidizing agents are, for instance: potassium permanganate, chromates, dichromates, Jones reagent and m-chloroperbenzoic acid. The oxidation reaction is preferably carried out using as reaction medium at least one solvent where both the oligomers or polymers and the oxidizing agent are at least partially soluble. Suitable solvents are, for instance: halogenated hydrocarbons, e.g. chloroform, dichloromethane.

Alternatively, the terminal double bonds C=C can be subjected to an addition reaction with a hydrogen halides, particularly HBr or HI, to introduce a halogen atom into the end-group. The resulting modified oligomers or polymers can be useful as macromers in ATRP (Atom Transfer Radical Polymerization) reactions.

The controlled molecular weight and the presence of double bonds and/or other functional groups as terminal groups make the above oligomers or polymers particularly suitable as macromers (building blocks) for the synthesis and/or modification of polymers, particularly of biodegradable polymers. Moreover, the PHA oligomers or polymers may be used in the area of controlled delivery systems in agro-chemistry, in the cosmetic industry, in medicine in the form of nano- or microspheres, in household products and in coating systems.

The following working examples are given to better illustrate the invention, but without limiting its scope.

### EXAMPLE 1.

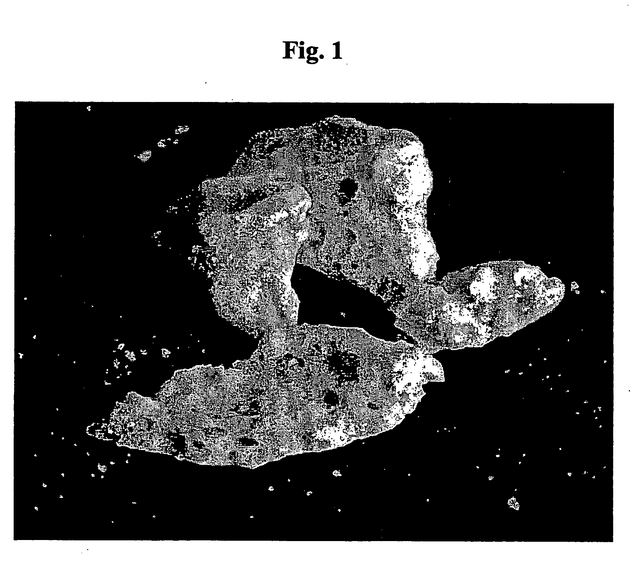

30 g of poly([R]-3-hydroxybutyrate) (PHB) (Mw = 431000; Mw/Mn = 3) in form of powder dry-mixed with 3 g of anhydrous sodium carbonate (POCh Gliwice) (0.944 mmol of the salt/g of PHB) was thermally treated in a single screw extruder with simultaneous mixing for about 2 minutes with maximum temperature of 170°C (measured in plasticizing zone). Resulting material was a white brittle foam. SEC analysis, according to conventional polystyrene (PS) calibration, gave Mw = 5900 and Mw/Mn = 3. A photograph of the resulting foamed material is reported in the enclosed Figure 1.

For comparison the PHB sample was thermally treated in the same single screw extruder without adding the carbonate: 30 g of the same PHB from Biomer (Mw = 431000; Mw/Mn = 3) in form of powder was treated in the same extruder with simultaneous mixing for about 2 minutes with maximum temperature of 170°C (measured in plasticizing zone). The resulting stiff material subjected to SEC analysis according to conventional PS calibration gave Mw = 345000 and Mw/Mn = 3. In both cases ¹H NMR analysis confirmed the presence of crotonate terminal groups, while no crotonic acid proton signals were observed.

It is to be noted that grinding of the carbonate thermally treated polymer is much easier than grinding the material obtained by mere thermal degradation.

### EXAMPLE 2.

30 g of PHB from Biomer (Mw = 431000; Mw/Mn = 3) in form of powder was dry-mixed with 6 g of anhydrous sodium carbonate (POCh Gliwice) and thermally treated in a single screw extruder with simultaneous mixing for about 2 minutes with maximum temperature of 150°C (measured in plasticizing zone). The resulting foamed material was subjected to SEC analysis which gave Mw = 39000 and Mw/Mn = 4. ¹H NMR analysis confirmed the presence of crotonate terminal groups while no signals of crotonic acid were observed.

### EXAMPLE 3.

20 g of poly([R]-3-hydroxybutyrate) (PHB) from Biomer (Mw = 431000, Mw/Mn = 3) in form of powder was dry-mixed with 2.608g of anhydrous potassium carbonate (POCh Gliwice) (0.944 mmol of the salt/g of PHB) and thermally treated in a single screw extruder with simultaneous mixing for about 2 minutes with maximum temperature of 170°C (measured in plasticizing zone). The resulting material, after cooling, formed a white brittle foam. SEC analysis according to conventional calibration on PS gave Mw = 3900 and Mw/Mn = 2.

### EXAMPLE 4 (comparative).

20 g of poly([R]-3-hydroxybutyrate) (PHB) from Biomer (Mw = 431000, Mw/Mn = 3.2) in form of powder was dry-mixed with 1.852 g of anhydrous potassium acetate (AcOK) (Fluka) (0.944 mmol of the salt/g of PHB) and thermally treated in a single screw extruder with simultaneous mixing for about 2 minutes with maximum temperature of 170°C (measured in plasticizing zone). The resulting material was a honey-like dark brown very viscous liquid. SEC analysis according to conventional calibration on PS gave Mw = 2900, and Mw/Mn = 2. It is to be noted that the resulting oligomer is very difficult to be extracted from the extruder and subsequently processed. Moreover, it is worth noting that the amount cation mols/salt mols in AcOK is only half the amount in the corresponding carbonate, which means that carbonates are degradation agents much milder than acetates, leading to a better control of the degradation reaction.

### EXAMPLE 5.

10 g of PHBV (poly([R]-3-hydroxybutyrate-co-valerate)) from Aldrich (Mw = 690000, Mn = 280000, Mw/Mn = 2.45, 12 mol% of valerate units) in form of powder was dry-mixed with 1 g of anhydrous sodium carbonate (POCh Gliwice) and thermally treated in a single screw extruder with simultaneous mixing for about 2 minutes with maximum temperature of 170°C (measured in plasticizing zone). The resulting material was a brittle foam. SEC analysis according to conventional calibration on PS gave Mw = 10000, Mn = 4000 and Mw/Mn=2.5.

For comparison a PHBV sample was thermally treated in the same single screw extruder without adding the carbonate: 20 g of the same PHBV from Aldrich (Mw = 690000, Mn = 280000, Mw/Mn = 2.45, 12 mol% of valerate units) in form of powder was thermally treated in the same extruder with simultaneous mixing for about 2 minutes with maximum temperature of 170°C (measured in plasticizing zone). The resulting material was in form of a film. SEC analysis according to conventional calibration on PS gave Mw = 680000, Mn = 275000 and Mw/Mn = 2.47. In both cases ¹H NMR analysis confirmed the presence of unsaturated terminal groups.

### EXAMPLE 6.

1 g of PHBV (poly([R]-3-hydroxybutyrate-co-valerate)) from Aldrich (Mw = 690000, Mw/Mn = 2.45, 12 mol% of valerate units) in form of powder was dry-mixed with 0.10 g of anhydrous sodium carbonate (POCh Gliwice) (0.944 mmol of the salt/g of PHBV; 1.887 meq of Na⁺/g of PHBV). A sample of 100 mg of the mixture was pressed at room temperature in form of pellet. Then the pellet was isothermally treated in an oven at a temperature of 170°C for 1 hour. The resulting material was in form of light brown foamed wax. SEC analysis revealed Mw = 4400, Mw/Mn = 2.5.

### EXAMPLE 7.

1 g of PHBV (poly([R]-3-hydroxybutyrate-co-valerate)) from Aldrich (Mw = 690000, Mw/Mn = 2.45, 12 mol% of valerate units) in form of powder was dry-mixed with 0.1304 g of anhydrous potassium carbonate (POCh Gliwice) (0.944 mmol of the salt/g of PHBV; 1.887 meq of K+/g of PHBV). A sample of 100 mg of the mixture was pressed in form of pellet. Then the pellet was isothermally treated in an oven at a temperature of 170°C for 1 hour. The resulting material was in form of brownish slightly foamed wax. SEC analysis revealed Mw = 550, Mw/Mn = 1.3.

### EXAMPLE 8 (comparative).

1 g of PHBV (poly([R]-3-hydroxybutyrate-co-valerate)) from Aldrich (Mw = 690000, Mw/Mn = 2.45, 12 mol% of valerate units) in form of powder was dry-mixed with 0.0926 g of potassium acetate (Aldrich) (0.944 mmol of the salt/g of PHBV; 0.944 meq of K⁺/g of PHBV). A sample of 100 mg of the mixture was pressed in form of pellet. Then the pellet was isothermally treated in an oven at a temperature of 170°C for 1 hour. The resulting material was in form of dark brown wax. SEC analysis revealed Mw = 1500, Mw/Mn = 2.1.

### EXAMPLE 9 (comparative).

1 g of PHBV (poly([R]-3-hydroxybutyrate-co-valerate)) from Aldrich (Mw = 690000, Mw/Mn = 2.45, 12 mol% of valerate units) in form of powder was dry-mixed with 0.1852 g of potassium acetate (Aldrich) (1.887 mmol of the salt/g of PHBV; 1.887 meq of K⁺/g of PHBV). A sample of 100 mg of the mixture was pressed in form of pellet. Then the pellet was isothermally treated in an oven at a temperature of 170°C for 1 hour. The resulting material was in form of dark brown very viscous liquid. SEC analysis revealed Mw = 700, Mw/Mn = 1.8.

The above Examples 6-7 illustrate the influence of the salt type and cation size on the kinetics of the degradation. Comparing Example 6 with Example 7 it is apparent that a larger cation (K⁺ versus Na⁺) yields a more active salt. Comparing Examples 7 and 9, where counterion and concentration were the same, but the salts were different (carbonate versus acetate), it can be noted that the use of carbonates yields oligomers in form of foam that can be easily processed, and moreover corrosive vapors of acetic acid are avoided.

### EXAMPLE 10.

1 g of PHBV (poly([R]-3-hydroxybutyrate-co-valerate)) from Aldrich (Mw = 690000, Mw/Mn = 2.45, 12 mol% of valerate units) in form of powder was dry-mixed with 0.10 g of anhydrous sodium carbonate (POCh Gliwice) (0.944 mmol of the salt/g of PHB; 1.887 meq of K⁺/g of PHBV). A sample of 100 mg of the mixture was pressed in form of pellet. Then the pellet was isothermally treated in an oven at a temperature of 170°C for 2 hours. The resulting material was in form of brownish slightly foamed wax. SEC analysis revealed Mw = 550, Mw/Mn = 1.6.

By comparing Example 10 with Example 6, it is apparent the influence of the reaction time on the molar mass of the resulting product: the longer the degradation time the lower the molar mass of the resulting oligomer.

### EXAMPLE 11.

1 g of PHBV (poly([R]-3-hydroxybutyrate-co-valerate)) from Aldrich (Mw = 690000, Mw/Mn = 2.45, 12 mol% of valerate units) in form of powder was dry-mixed with 0.05 g of anhydrous sodium carbonate (POCh Gliwice) (0.472 mmol of the salt/g of PHB; 0.944 meq of Na⁺/g of PHBV). A sample of 100 mg of the mixture was pressed in form of pellet. Then the pellet was isothermally treated in an oven at a temperature of 170°C for 1 hour. The resulting material was in form of pale yellow solid foam. SEC analysis revealed Mw = 6100, Mw/Mn = 2.8.

By comparing Example 11 with Example 6, it is apparent the influence of the salt amount on the molar mass of the resulting product: the higher the salt amount the lower the molar mass of the resulting oligomer.

### EXAMPLE 12.

2 g of PHB (poly([R]-3-hydroxybutyrate)) from Biomer (Mw= 431000, Mw/Mn=3) in form of powder were mixed with 0.1585 g of anhydrous sodium bicarbonate (POCh Gliwice) (0.9435 mmol of the salt/g of PHB; 0.9435 meq of Na⁺/g of PHB). A sample of 100 mg of the mixture was pressed in form of pellet. Next the pellets have been isothermally treated at temperature of 200°C for 5 min. The resulting material was a white brittle foam. SEC analysis revealed Mw = 4150, Mw/Mn = 2.6, mass at peak maximum Mp = 4900.

### EXAMPLE 13.

2 g of PHB (poly([R]-3-hydroxybutyrate)) from Biomer (Mw= 431000, Mw/Mn=3) in form of powder were mixed with 0.317 g of anhydrous sodium bicarbonate (POCh Gliwice) (1.887 mmol of the salt/g of PHB; 1.887 meq of Na⁺/g of PHB). A sample of 100 mg of the mixture was pressed in form of pellet. Next the pellets have been isothermally treated at temperature of 200°C for 5 min. The resulting material was a white brittle foam. SEC analysis revealed Mw=4200, Mw/Mn=2.35, mass at peak maximum Mp=3700.

### EXAMPLE 14.

2 g of PHB (poly([R]-3-hydroxybutyrate)) from Biomer (Mw= 431000, Mw/Mn=3) in form of powder were mixed with 0.2 g of anhydrous sodium carbonate (POCh Gliwice) (0.9435 mmol of the salt/g of PHB; 1.887 meq of Na⁺/g of PHB). A sample of 100 mg of the mixture was pressed in form of pellet. Next the pellets have been isothermally treated at temperature of 200°C for 5 min. The resulting material was a white brittle foam. SEC analysis revealed Mw=4300, Mw/Mn=3.88, mass at peak maximum Mp=3450.

### EXAMPLE 15 (comparative).

A sample of 100 mg of PHB (poly([R]-3-hydroxybutyrate)) from Biomer (Mw= 431000, Mw/Mn=3) in form of powder was taken and pressed in form of pellet. Next the pellets were isothermally treated at temperature of 200°C for 5 min. The resulting material was a white brittle pellet. SEC analysis revealed Mw = 398000, Mw/Mn = 2.79, mass at peak maximum Mp = 419000.

### EXAMPLE 16.

3.319 g (12.25 mmol) of m-chloroperoxybenzoic acid was added into a reactor containing a solution of 0.5 g of aPHB (atactic poly([R, S]-3-hydroxybutyrate) (Mw = 1500) having terminal crotonate groups in 10 ml of methylene chloride. The oxidation reaction was carried out at 30°C for 48 hours by vigorously stirring the reaction mixture. Then the mixture was washed with 20 ml 5% aqueous solution of sodium carbonate and washed five times with water, acidified with 20 ml of diluted HCl_{(aq)} subsequently. Next it had been washed five times with 20 ml of distilled water until neutral pH-value was reached. The product was isolated by precipitation in cold hexane. The obtained product had terminal 2,3-epoxybutyrate group, Mw = 1350.

## Claims

1. A process for producing foamed polyhydroxyalkanoate (PHA) oligomers and/or polymers of reduced molecular weight, which comprises reacting at least one PHA with at least one carbonate salt at a temperature of from 50°C to 300°C, preferably from 120°C to 200°C.

2. The process according to claim 1, wherein the at least one PHA contains at least one repeating unit having the following formula:
-O-C(R¹R²)-C(HR³)-C(O)- (I)
wherein:
R¹, R² and R³, equal or different from each other, are selected from: -H, C₁-C₈ alkyl, C₂-C₈ alkenyl, C₆-C₁₀ aryl, said alkyl, alkenyl and aryl groups being optionally substituted by at least one functional group selected from carboxyl, hydroxyl, halogen and alkoxyl groups.

3. The process according to claim 2, wherein the at least one PHA is a homopolymer, copolymer or terpolymer formed: (i) by different repeating units corresponding to formula (I), or (ii) by at least one repeating unit of formula (I) and by at least one repeating unit deriving from comonomers able to copolymerize with 3-hydroxyalkanoates, the repeating units of formula (I) being present in an amount of at least 5% by mole with respect to the total moles of repeating units.

4. The process according to claim 2 or 3, wherein the at least one repeating unit of formula (I) is selected from: 3-hydroxybutyrate, 3-hydroxyvalerate, 3-hydroxyhexanoate, 3-hydroxyoctanoate, 3-hydroxyundec-10-enoate, or combinations thereof.

5. The process according to anyone of the preceding claims, wherein the at least one carbonate salt is selected from carbonates, bicarbonates or mixtures thereof, either anhydrous or in a hydrated form.

6. The process according to anyone of the preceding claims, wherein the at least one carbonate salt has a counterion selected from cations of: alkali metals, e.g. sodium, potassium; alkaline-earth metals, e.g. magnesium, calcium.

7. The process according to anyone of the preceding claims, wherein the molar ratio between the PHA and the carbonate salt is within a range from 1000:1 3HA units/salt to 10:1 3HA units/salt, preferably from 500:1 3HA units/salt to 10:1 3HA units/salt.

8. The process according to anyone of the preceding claims, wherein the so obtained oligomers and/or polymers are subsequently subjected to an oxidation reaction, preferably carried out by means of an inorganic or organic peroxide, peracid or persalt.

9. The process according to anyone of claims from 1 to 9, wherein the so obtained oligomers and/or polymers are subsequently subjected to an addition reaction with a hydrogen halide, particularly HBr or HI.

10. Polyhydroxyalkanoate oligomers and/or polymers of reduced molecular weight obtainable with the process according to anyone of claims from 1 to 9, said oligomers and/or polymers being in the form of a foamed material and having a weight average molecular weight (Mw) of from 1,200 to 25,000.

11. Polyhydroxyalkanoate oligomers and/or polymers of reduced molecular weight according to claim 10, said oligomers and/or polymers having a weight average molecular weight (Mw) of from 1,200 to 25,000 and having, as first end-group, a carboxyl or carboxylate group and, as second end-group, a functional group selected from: carboxyl, carboxylate, hydroxyl, dihydroxyl, oxirane ring, halogen atom.

12. Polyhydroxyalkanoate oligomers and/or polymers according to claim 10 or 11, containing at least one repeating unit having the following formula:
-O-C(R¹R²)-C(HR³)-C(O)- (I)
wherein:
R¹, R² and R³, equal or different from each other, are selected from: -H, C₁-C₈ alkyl, C₂-C₈ alkenyl, C₆-C₁₀ aryl, said alkyl, alkenyl and aryl groups being optionally substituted by at least one functional group selected from carboxyl, hydroxyl, halogen and alkoxyl groups.

13. Polyhydroxyalkanoate oligomers and/or polymers according to claim 12, containing: (i) different repeating units corresponding to formula (I), or (ii) at least one repeating unit of formula (I) with at least one repeating unit deriving from comonomers able to copolymerize with 3-hydroxyalkanoates, the repeating units of formula (I) being present in an amount of at least 5% by mole with respect to the total moles of repeating units.

14. Polyhydroxyalkanoate oligomers and/or polymers according to claim 13, wherein the at least one repeating unit of formula (I) is selected from: 3-hydroxybutyrate, 3-hydroxyvalerate, 3-hydroxyhexanoate, 3-hydroxyoctanoate, 3-hydroxyundec-10-enoate, or combinations thereof.

15. Use of polyhydroxyalkanoate oligomers and/or polymers according to anyone of claims from 10 to 14, as macromers (building blocks) for the synthesis and/or modification of polymers, particularly of biodegradable polymers.

## Patentansprüche

1. Verfahren zur Herstellung von Oligomeren und/oder Polymeren von Polyhydroxylalkanoat-Schaum (PHA) mit einem reduzierten Molekulargewicht, umfassend die Reaktion von mindestens einem PHA mit mindestens einem Carbonatsalz bei einer Temperatur von 50 °C bis 300 °C, vorzugsweise von 120 °C bis 200 °C.

2. Verfahren nach Anspruch 1, wobei das mindestens eine PHA mindestens eine Repeating Unit enthält, die folgende Formel aufweist:
-0-C(R¹R²)-C(HR³)-C(O)- (I)
wobei:
R¹, R² and R³', gleich oder voneinander unterschiedlich, ausgewählt werden aus: -H, C₁-C₈ Alkyl, C₂- C₈ Alkenyl, C₆-C₁₀ Aryl, wobei diese Alkyl-, Alkenyl- und ArylGruppen optional durch mindestens eine Funktionsgruppe ersetzt werden, ausgewählt aus Carboxyl-, Hydroxyl-, Halogen- und Alkoxyl-Gruppen.

3. Verfahren nach Anspruch 2, wobei das mindestens eine PHA ein Homopolymer, Copolymer oder Terpolymer ist, geformt: (i) durch unterschiedliche Repeating Units, entsprechend der Formel (I), oder (ii) durch mindestens eine Repeating Unit der Formel (I) und mindestens eine Repeating Unit, abgeleitet aus Comonomeren, in der Lage zur Copolymerisation mit 3-Hydroxylalkanoaten, wobei die Repeating Units der Formel (I) in einer Menge von mindestens 5 % Molanteil im Vergleich zu den Gesamtmolen der Repeating Units enthalten sind.

4. Verfahren nach Anspruch 2 oder 3, wobei die mindestens eine Repeating Unit der Formel (I) ausgewählt ist aus: 3-Hydroxybutyrat, 3-Hydroxyvalerat, 3-Hydroxyhexanoat, 3-Hydroxyoctanoat, 3-Hydroxyundec-10-enoat oder einer Kombination davon.

5. Verfahren nach einem der vorhergehenden Ansprüche, wobei das mindestens eine Carbonatsalz ausgewählt ist aus Carbonaten, Bicarbonaten oder einer Mischung davon, entweder wasserfrei oder in einer wasserhaltigen Form.

6. Verfahren nach einem der vorhergehenden Ansprüche, wobei das mindestens eine Carbonatsalz ein Gegenion aufweist, ausgewählt aus Kationen von: Alkalimetallen, z. B. Natrium, Kalium; Erdalkalimetallen, z. B. Magnesium, Calcium.

7. Verfahren nach einem der vorhergehenden Ansprüche, wobei das molare Verhältnis zwischen dem PHA und dem Carbonatsalz innerhalb eines Bereichs von 1000:1 3HA-Einheiten/Salz bis 10:1 3HA-Einheiten/Salz liegt, vorzugsweise von 500:1 3HA-Einheiten/Salz bis 10:1 3HA-Einheiten/Salz.

8. Verfahren nach einem der vorhergehenden Ansprüche, wobei die so erhaltenen Oligomere und/oder Polymere anschließend einer Oxidationsreaktion ausgesetzt werden, die vorzugsweise mittels eines/einer anorganischen oder organischen Peroxids, Persäure oder Persalzes stattfindet.

9. Verfahren nach einem der Ansprüche 1 bis 9, wobei die so erhaltenen Oligomere und/oder Polymere anschließend einer zusätzlichen Reaktion mit einem Hydrogenhalogenid, insbesondere Hbr oder HI, ausgesetzt werden.

10. Polyhydroxylalkanoat-Oligomere und/oder -Polymere mit reduziertem Molekulargewicht, die mit dem Verfahren nach einem der Ansprüche 1 bis 9 gewonnen werden können, wobei diese Oligomere und/oder Polymere die Form eines Schaummaterials aufweisen und ein Gewichtsmittel des Molekulargewichts (MG) von 1200 bis 25.000 besitzen.

11. Polyhydroxylalkanoat-Oligomere und/oder -Polymere mit reduziertem Molekulargewicht nach Anspruch 10, wobei diese Oligomere und/oder Polymere ein Gewichtsmittel des Molekulargewichts (MG) von 1200 bis 25.000 aufweisen und als erste Endgruppe eine Carboxyl- oder Carboxylat-Gruppe und als zweite Endgruppe eine Funktionsgruppe besitzen, ausgewählt aus: Carboxyl, Carboxylat, Hydroxyl, Dihydroxal, Oxiranring, Halogenatom.

12. Polyhydroxylalkanoat-Oligomere und/oder -Polymere nach Anspruch 10 oder 11, enthaltend mindestens eine Repeating Unit, aufweisend folgende Formel:
-0-C(R¹R²)-C(HR³)-C(O)- (I)
wobei:
R¹, R² and R³', gleich oder voneinander unterschiedlich, ausgewählt werden aus: -H, C₁-C₈ Alkyl, C₂- C₈ Alkenyl, C₆-C₁₀ Aryl, wobei diese Alkyl-, Alkenyl- und ArylGruppen optional durch mindestens eine Funktionsgruppe ersetzt werden, ausgewählt aus Carboxyl-, Hydroxyl-, Halogen- und Alkoxyl-Gruppen.

13. Polyhydroxylalkanoat-Oligomere und/oder -Polymere nach Anspruch 12, enthaltend: (i) unterschiedliche Repeating Units, entsprechend der Formel (I), oder (ii) mindestens eine Repeating Unit der Formel (I) mit mindestens einer Repeating Unit, abgeleitet aus Comonomeren, in der Lage zur Copolymerisation mit 3-Hydroxylalkanoaten, wobei die Repeating Units der Formel (I) in einer Menge von mindestens 5 % Molanteil im Vergleich zu den Gesamtmolen der Repeating Units enthalten sind.

14. Polyhydroxylalkanoat-Oligomere und/oder -Polymere nach Anspruch 13, wobei die mindestens eine Repeating Unit der Formel (I) ausgewählt ist aus: 3-Hydroxybutyrat, 3-Hydroxyvalerat, 3-Hydroxyhexanoat, 3-Hydroxyoctanoat, 3-Hydroxyundec-10-enoat oder einer Kombination davon.

15. Verwendung von Polyhydroxylalkanoat-Oligomeren und/oder -Polymeren nach einem der Ansprüche 10 bis 14 als Makromere (Bausteine) für die Synthese und/oder Modifizierung von Polymeren, insbesondere von biologisch abbaubaren Polymeren.

## Revendications

1. Procédé servant à produire des oligomères et/ou des polymères à poids moléculaire réduit de polyhydroxyalkanoate (PHA) expansé, qui comprend faire réagir au moins un PHA avec au moins un sel carbonate à une température comprise entre 50 et 300°C, de préférence entre 120 et 200°c.

2. Procédé selon la revendication 1, dans lequel l'au moins un PHA contient au moins une unité structurale ayant la formule suivante :
-0-C(R¹R²)-C(HR³)-C(O)- (I)
dans laquelle :
R¹, R² et R³ égaux ou différents entre eux, sont sélectionnés parmi : -H, alkyle C₁-C₈, alkenyle C₂- C₈, aryle C₆-C₁₀, lesdits groupes alkyle, alkenyle et aryle étant éventuellement remplacés par au moins un groupe fonctionnel sélectionné parmi les groupes carboxyle, hydroxyle, halogène et alkoxyle.

3. Procédé selon la revendication 2, dans lequel l'au moins un PHA est un homopolymère, un copolymère ou un terpolymère formé : (i) par différentes unités structurales correspondant à la formule (I), ou (ii) par au moins une unité structurale de formule (I) et par au moins une unité structurale dérivant de comonomères aptes à copolymériser avec les 3-hydroxyalkanoates, les unités structurales de formule (I) étant présentes dans une proportion équivalente à au moins 5 % par mole par rapport aux moles totales des unités structurales.

4. Procédé selon les revendications 2 ou 3, dans lequel l'au moins une unité structurale de formule (I) est sélectionnée parmi : 3-hydroxybutyrate, 3-hydroxyvalerate, 3- hydroxyhexanoate, 3-hydroxyoctanoate, 3-hydroxy undec-10-enoate, ou leurs combinaisons.

5. Procédé selon l'une quelconque des revendications précédentes, dans lequel l'au moins un sel carbonate est sélectionné parmi des carbonates, des bicarbonates ou leurs mélanges, que ce soit sous forme anhydre ou hydratée.

6. Procédé selon l'une quelconque des revendications précédentes, dans lequel ledit au moins un sel carbonate a un contre-ion sélectionné parmi les cations de : métaux alcalins, par exemple de sodium et de potassium ; métaux alcalino-terreux, par exemple de magnésium et de calcium.

7. Procédé selon l'une quelconque des revendications précédentes, dans lequel le rapport molaire entre le PHA et le sel carbonate se situe dans une fourchette de 1000:1 unités 3HA/sel à 10:1 unités 3HA/sel, de préférence de 500: 1 unités 3HA/sel à 10:1 unités 3HA/sel.

8. Procédé selon l'une quelconque des revendications précédentes, dans lequel les oligomères et/ou polymères ainsi obtenus sont par la suite soumis à une réaction d'oxydation, de préférence réalisée par le biais d'un peroxyde, d'un peracide ou d'un persel inorganique ou organique.

9. Procédé selon l'une quelconque des revendications de 1 à 9, dans lequel les oligomères et/ou polymères ainsi obtenus sont par la suite soumis à une réaction d'addition avec un hydracide, particulièrement un HBr ou un HI.

10. Oligomères et/ou polymères à poids moléculaire réduit de polyhydroxyalkanoate pouvant être obtenus par le procédé selon l'une quelconque des revendications de 1 à 9, lesdits oligomères et/ou polymères ayant la forme d'un plastique expansé et ayant un poids moléculaire moyen pondéral (Mw) compris entre 1 200 et 25 000.

11. Oligomères et/ou polymères à poids moléculaire réduit de polyhydroxyalkanoate selon la revendication 10, lesdits oligomères et/ou polymères ayant un poids moléculaire moyen pondéral (Mw) compris entre 1 200 et 25 000 et ayant, comme premier groupe terminal, un groupe carboxyle ou carboxylate et, comme second groupe terminal, un groupe fonctionnel sélectionné parmi : carboxyle, carboxylate, hydroxyle, dihydroxyle, cycle oxirane et atome halogène.

12. Oligomères et/ou polymères de polyhydroxyalkanoate selon les revendications 10 ou 11, contenant au moins une unité structurale ayant la formule suivante :
-O-C(R¹R²)-C(HR³)-C(O)- (I)
dans laquelle :
R¹, R² et R³ égaux ou différents entre eux, sont sélectionnés parmi : -H, alkyle C₁-C₈, alkenyle C₂-C₈, aryle C₆-C₁₀, lesdits groupes alkyle, alkenyle et aryle étant éventuellement remplacés par au moins un groupe fonctionnel sélectionné parmi les groupes carboxyle, hydroxyle, halogène et alkoxyle.

13. Oligomères et/ou polymères de polyhydroxyalkanoate selon la revendication 12, contenant : (i) des différentes unités structurales correspondant à la formule (I), ou (ii) par au moins une unité structurale de formule (I) et par au moins une unité structurale dérivant de comonomères aptes à copolymériser avec les 3- hydroxyalkanoates, les unités structurales de formule (I) étant présentes en proportion à au moins 5 % par mole par rapport aux moles totales des unités structurales.

14. Oligomères et/ou polymères de polyhydroxyalkanoate selon la revendication 13, dans lesquels l'au moins une unité structurale de formule (I) est sélectionnée parmi : 3-hydroxybutyrate, 3-hydroxyvalerate, 3-hydroxyhexanoate, 3-hydroxyoctanoate, 3-hydroxy undec-10-enoate, ou leurs combinaisons.

15. Emploi d'oligomères et/ou de polymères de polyhydroxyalkanoate selon l'une quelconque des revendications de 10 à 14, comme des macromères (Synthon) pour la synthèse et/ou la modification de polymères, en particulier de polymères biodégradables.
